# EUROPÄISCHE PATENTANMELDUNG

(11) **EP 3 958 222 A1**
(43) Veröffentlichungstag der Anmeldung: **23.02.2022**
(21) Anmeldenummer: 20191284.7
(22) Anmeldetag: 17.08.2020
(51) Int. Cl.: G07B 15/02, G06Q 30/04

(54) **ANORDNUNG UND VERFAHREN ZUR PARKRAUMÜBERWACHUNG**

(71) Anmelder: DOHNA & RÜTER PATENT GBR, 22453 Hamburg (DE)
(72) Erfinder: RÜTER, Julien Maxmilian, 24105 Kiel (DE); BURGGRAF UND GRAF ZU DOHNA-SCHLOBITTEN, Moritz K., 20149 Hamburg (DE)
(74) Vertreter: Glawe, Delfs, Moll

(57) **Zusammenfassung**

Die Erfindung betrifft eine Anordnung (1) und ein Verfahren zur Parkraumüberwachung von anhand von Kraftfahrzeugkennzeichen identifizierten Fahrzeugen auf Parkflächen (10, 20).

Erfindungsgemäß sind an jeder Zufahrt (13, 14, 23, 24) Kennzeichnungserkennungssysteme (30) vorgesehen, mit denen die Registrierungsnummern aller auf einer Parkfläche (10, 20) ein-und ausfahrenden Fahrzeuge zeitgenau erfasst werden. Die Registrierungsnummern und die dazugehörigen Zeitstempel werden an einen zentralen Server (40) übermittelt, der aus für eine Registrierungsnummer übermittelte Zeitstempel für Ein- und Ausfahrt auf eine Parkfläche (10, 20) eine Parkzeit ermittelt. Anschließend wird überprüft, ob unter der Registrierungsnummer ein für die genutzte Parkfläche (10, 20) gültiges Parkzeitkontingent in einer dafür vorgesehen Datenbank (41) hinterlegt ist. Ist dies der Fall, wird das Parkzeitkontingent entsprechend der ermittelten Parkzeit reduziert oder gelöscht. Ist kein gültiges, ausreichendes Parkzeitkontingent vorhanden, erfolge eine nachträgliche Rechnungsstellung - bei registrierten Nutzern an eine vom Nutzer angegebene Adresse, bei nicht registrierten Nutzern an die dann noch zu ermittelnde Adresse des Fahrzeughalters.

## Beschreibung

Die Erfindung betrifft eine Anordnung und ein Verfahren zur Parkraumüberwachung von anhand von Kraftfahrzeugkennzeichen identifizierten Fahrzeugen auf Parkflächen.

Um Parkvorgänge von Fahrzeugen auf öffentlich zugänglichen Parkflächen, also von der Straße abgesetzten Parkplätzen, aber auch öffentlichen Parkhäusern, zu überwachen, sind verschiedene Ansätze bekannt.

So ist es u. a. bekannt, an den Parkflächen gut erkennbare Hinweise und/oder Parkplatzbestimmungen anzubringen, die auf die Notwendigkeit der Verwendung einer Parkscheibe oder eines Parktickets, welches an einem lokalen Parkscheinautomaten zu erwerben und gut sichtbar auf das Armaturenbrett zu legen ist, hinweist. Die gültige Verwendung einer Parkscheibe oder eines Parktickets ist dann manuell durch Kontrolleure zu überprüfen. Wird ein Verstoß gegen die Parkplatzbestimmungen festgestellt, kann bspw. ein Verwarnungsgeld oder eine Vertragsstrafe gegen den über das Kennzeichen des Fahrzeuges ermittelbaren Fahrzeughalter geltend gemacht werden.

Nachteilig hieran ist, dass für eine konsequente Parkraumüberwachung ein erheblicher Personalaufwand erforderlich ist und selbst dann nicht ausgeschlossen werden kann, dass unentdeckt Fahrzeuge entgegen der Parkplatzbestimmungen abgestellt werden. Letzteres ist besonders nachteilig bei aktiv bewirtschafteten Parkflächen, bei denen Parkgebühren zu entrichten sind.

Es ist weiter bekannt, bereits bei Einfahrt auf eine Parkfläche eine pauschale Parkgebühr zu erheben. Hierfür werden regelmäßig Parkplatzwächter eingesetzt, welche die Parkgebühren bei der Einfahrt abkassieren. Aufgrund des für dauerhaft geöffnete Parkflächen erforderlichen Personalaufwands, wird Entsprechendes regelmäßig nur bei temporär geschaffenen oder genutzten Parkflächen, bspw. an Veranstaltungsorten wie Fußballstadien, durchgeführt.

Darüber hinaus sind Schrankensysteme für gebührenpflichtige Parkflächen bekannt, bei denen die Einfahrt und Ausfahrt von einem Parkplatz durch Schranken geregelt wird. Dabei wird die Einfahrt regelmäßig erst dann freigegeben, wenn der Fahrer eines Fahrzeugs aus der Schrankenanlage an der Einfahrt einen Parkschein zieht. Mit Hilfe dieses Parkscheins kann er an einem dafür vorgesehenen Automaten seine Parkgebühr entrichten, wobei ihm die Ausfahrt erst dann freigegeben wird, wenn er den bezahlten Parkschein in der Schrankenanlage an der Ausfahrt eingibt.

Nachteilig an diesem grundsätzlich bewährten System sind die erheblichen Investitions- und Wartungskosten der mechanischen Schrankenanlagen und der Bezahlautomaten. Außerdem erfordern entsprechende Anlagen im Grundsatz voneinander getrennte Ein-und Ausfahrten, was nicht für jede Parkfläche unmittelbar realisierbar ist.

Aufgabe der vorliegenden Erfindung ist es, eine Anordnung und ein Verfahren zur Parkraumüberwachung von abgegrenzten Parkflächen zu schaffen, bei denen die Nachteile aus dem Stand der Technik nicht mehr oder nur noch in geringerem Maße auftreten.

Gelöst wird diese Aufgabe durch eine Anordnung gemäß dem Hauptanspruch sowie ein Verfahren gemäß dem nebengeordneten Anspruch. Vorteilhafte Weiterbildungen sind Gegenstand der abhängigen Ansprüche.

Demnach betrifft die Erfindung eine Anordnung zur Parkraumüberwachung von anhand Kennzeichen identifizierbaren Fahrzeugen auf wenigstens einer Parkfläche mit wenigstens einer Zufahrt für registrierte und nicht registrierte Nutzer umfassend
- jeweils ein Kennzeichenerkennungssystem an allen Zufahrten jeder Parkfläche zur zeitgenauen Erfassung der Registriernummer jedes ein- und/oder ausfahrenden Fahrzeugs und Übermittelung wenigstens der erfassten Registriernummer und einem Zeitstempel an einen zentralen Server;
- einen zentralen Server zur Ermittlung der Parkzeit eines durch die Registriernummer eindeutig identifizierbaren Fahrzeugs anhand der von den Kennzeichenerkennungssystemen übermittelten Daten durch Abgleich des Zeitstempels der erfassten Zufahrt des Fahrzeugs auf die Parkfläche und des Zeitstempels der erfassten nachfolgenden Ausfahrt des Fahrzeugs von der Parkfläche,
   wobei der zentrale Server zum Abgleich der ermittelten Parkzeit mit in einer dem zentralen Server zugänglichen Datenbank hinterlegten und anhand von Registriernummern zuordenbaren Parkzeitkontingenten dazu ausgebildet ist,
- die ermittelte Parkzeit von einem der erfassten Registriernummer zuordenbaren, ausreichenden Parkzeitkontingent abzuziehen oder ein der erfassten Registriernummer zuordenbaren, ausreichenden Parkzeitkontingent zu löschen;
- bei einem der erfassten Registriernummer zuordenbaren, aber nicht ausreichenden Parkzeitkontingent oder bei keinem der erfassten Registriernummer zuordenbaren Parkzeitkontingent: Auslösen einer nachträglichen Rechnungsstellung an, bei registrierten Nutzern, eine in einer dem zentralen Server zugänglichen Datenbank hinterlegten, der erfassten Registriernummer zuordenbaren Kontaktadresse oder, bei nicht registrierten Nutzern, an den über die Registriernummer ermittelbaren Halter des Fahrzeugs.

Weiterhin betrifft die Erfindung ein Verfahren zur Parkraumüberwachung von anhand Kennzeichen identifizierbaren Fahrzeugen auf wenigstens einer Parkfläche mit wenigstens einer Zufahrt für registrierte und nicht registrierte Nutzer, umfassend
- Zeitgenaues Erfassen der Registriernummer jedes ein-und/oder ausfahrenden Fahrzeugs mit Hilfe von Kennzeichenerkennungssystemen an allen Zufahrten jeder Parkfläche und Übermittelung wenigstens der erfassten Registriernummer und einem Zeitstempel an einen zentralen Server;
- Ermitteln der Parkzeit eines durch die Registriernummer eindeutig identifizierbaren Fahrzeugs anhand der von den Kennzeichenerkennungssystemen übermittelten Daten durch Abgleich des Zeitstempels der erfassten Zufahrt des Fahrzeugs auf die Parkfläche und des Zeitstempels der erfassten nachfolgenden Ausfahrt des Fahrzeugs von der Parkfläche durch einen zentralen Server,
- Abgleich der ermittelten Parkzeit mit in einer dem zentralen Server zugänglichen Datenbank hinterlegten und anhand von Registriernummern zuordenbaren Parkzeitkontingenten, wobei
- die ermittelte Parkzeit von einem der erfassten Registriernummer zuordenbaren, ausreichenden Parkzeitkontingent abgezogen oder ein der erfassten Registriernummer zuordenbares, ausreichendes Parkzeitkontingent gelöscht wird;
- bei einem der erfassten Registriernummer zuordenbaren, aber nicht ausreichenden Parkzeitkontingent oder bei keinem der erfassten Registriernummer zuordenbaren Parkzeitkontingent, eine nachträgliche Rechnungsstellung an, bei registrierten Nutzern, eine in einer dem zentralen Server zugänglichen Datenbank hinterlegten, der erfassten Registriernummer zuordenbaren Kontaktadresse oder, bei nicht registrierten Nutzern, an den über die Registriernummer ermittelbaren Halter des Fahrzeugs ausgelöst wird.
Zunächst werden einige in Zusammenhang mit der Erfindung verwendete Begriffe erläutert.

Mit "Parkfläche" ist eine von öffentlichen Straßen als Verkehrsfläche abgesetzte Fläche bezeichnet, die dem Abstellen von Fahrzeugen, insbesondere PKW, dient. Die Parkfläche ist über Zufahrten an umliegende Straßen angebunden, wobei die Zufahrten als Einfahrten, Ausfahrten oder kombinierte Ein- und Ausfahrten vorgesehen sein können. Bei den Parkflächen kann es sich um ebenerdige Parkplätze handeln. Es ist aber auch möglich, dass es sich bei einer Parkfläche um ein mehrstöckiges Parkhaus handelt.

Mit "Kraftfahrzeugkennzeichen" - umgangssprachlich auch "Nummernschild" - ist ein an jedem Fahrzeug aus zulassungsrechtlichen Gründen angebrachtes Kennzeichen mit einer aus der Entfernung ablesbaren alphanumerischen Registriernummer bezeichnet. In den meisten Ländern sind Kraftfahrzeugkennzeichen sowohl vorne als auch am Heck eines Fahrzeugs Pflicht, in einzelnen Ländern kann auch ein Kraftfahrzeugkennzeichen vorne oder am Heck eines Fahrzeugs ausreichend sein.

Mit "Kennzeichenerkennungssystem" ist ein System zur automatischen Nummernschilderkennung bezeichnet, wie es aus dem Stand der Technik bekannt ist. Dabei wird durch eine Bilderfassungseinheit eine digitale fotografische Aufnahme eines Fahrzeuges, auf der das Kraftfahrzeugkennzeichen enthalten ist, von einer Auswerteeinheit digital, u. a. mit optischer Zeichenerkennung ("optical character regognition", OCR) verarbeitet, sodass als Ergebnis die auf den Kennzeichen angegebene Registriernummer als alphanumerische Zeichenkette vorliegt. Die von der Bilderfassungseinheit aufgenommenen Bilder müssen dazu ausreichend aufgelöst und in einem geeigneten Winkel gegenüber der Zufahrt bzw. dem Fahrzeug aufgenommen sein, um die Registriernummern von über die Zufahrt fahrenden Fahrzeugen auslesen zu können.

Sind bei mehreren Zufahrten gemäß der Erfindung mehrere Kennzeichenerkennungssysteme vorzusehen, kann es ausreichen, ausreichend viele Bilderfassungseinheiten und eine gemeinsame Auswerteeinheit vorzusehen.

Die von Kennzeichenerkennungssystemen ermittelten Registriernummern sind mit einem Zeitstempel versehen, der den Zeitpunkt, zu welchem die Registriernummer ermittelt wurde, eindeutig bzw. zeitgenau festhält. Der Zeitstempel kann bspw. aus dem Datum und der Uhrzeit des Zeitpunkts der fotografischen Aufnahme durch eine Bilderfassungseinheit oder aber der erfolgten Ermittlung der Registriernummer durch die Auswerteeinheit bestehen. Da Parkzeiten regelmäßig nur minutenweise überwacht und abgerechnet werden, sind kleinere Toleranzen um wenige Sekunden beim Zeitstempel problemlos handhabbar. Nichtsdestotrotz ist bei mehreren Bilderfassungs- und/oder Auswerteeinheiten sicherzustellen, dass diese, wie ggf. auch der zentrale Server, auf dieselbe Zeitreferenz, bspw. UTC, synchronisiert sind. Entsprechendes ist durch den Abgleich untereinander oder mit einem NTP-Server, oder durch Auswertung von DCF-77- oder GPS-Signalen aber ohne Weiteres im Rahmen der für die vorliegende Erfindung ausreichenden Genauigkeit möglich.

Mit "zentraler Server" sind eine logische Einheit bezeichnet, bei der sämtliche Daten eines oder mehrerer Kennzeichenerkennungssysteme zusammenlaufen. Der zentrale Server kann unmittelbar an einer Parkfläche, bspw. auch unmittelbar an einem Kennzeichenerkennungssysteme angeordnet sein. Er kann aber auch entfernt von der Parkfläche angeordnet sein und die Daten der Kennzeichenerkennungssysteme per Datenfernübertragung, bspw. über das Internet, empfangen. Insbesondere im letztgenannten Fall kann ein zentraler Server auch für mehrere Parkflächen genutzt werden. Bei dem zentralen Server kann es sich um eine zentrale physikalische oder virtuelle Maschine handeln. Er kann aber auch ein auf mehrere physikalische und/oder virtuelle Maschinen verteiltes System sein.

Die erfindungsgemäße Anordnung sowie das erfindungsgemäße Verfahren bieten die Möglichkeit einer automatisierten Parkraumüberwachung einer oder auch mehrerer Parkfläche, die gegenüber bekannten Schrankensystemen nur geringe bauliche Maßnahmen erfordert, nämlich die Installation von Kennzeichenerkennungssystemen an allen Zufahrten der Parkfläche(n), wobei die Anzahl an Zufahrten zur Parkfläche ebenso unerheblich ist wie, ob Zufahrten nur zur Ein- bzw. Ausfahrt oder aber zur Ein- und Ausfahrt dienen. Ggf. lassen sich einzelne Kennzeichenerkennungssysteme auch an bereits vorhandenen Masten für Schilder, Beleuchtung und/oder Videoüberwachung anbringen.

Darüber hinaus bietet die Erfindung den Vorteil, dass eine erfindungsgemäß ausgestattete Parkfläche grundsätzlich sowohl von registrierten als auch von nicht registrierten Nutzern genutzt werden kann. Insbesondere für letztgenannte Nutzergruppe können dabei selbst strengste Datenschutzbestimmungen eingehalten werden, da, wie nachfolgend erläutert, bei diversen Ausführungsvarianten abgesehen von der Registriernummer des Fahrzeugs keine Informationen über den Nutzer erhoben oder vorgehalten werden. Selbst die Registriernummer kann nach einem erfolgreich abgeschlossenen Parkvorgang gelöscht werden. Lediglich in den Fällen, in denen kein (ausreichendes) Parckontingent für eine Registriernummer vorliegt, erfolgt die Ermittlung des Fahrzeughalters - der grundsätzlich nicht mit dem Nutzer übereinstimmen muss - auf bekanntem und zulässigem Wege. Möchte sich ein Nutzer registrieren, um evtl. zusätzliche Services oder Angebote zu nutzen, geschieht dies freiwillig und ist - bei Einhaltung von gesetzlichen Datenschutzrichtlinien - aus Datenschutzsicht grundsätzlich unbedenklich, zumindest sofern nur für die zusätzlichen Services erforderlichen Daten erhoben werden.

Die erfindungsgemäße Anordnung ist dazu ausgebildet, die Registriernummern von sämtlichen Fahrzeugen, die über eine Zufahrt auf einen Parkplatz einfahren oder diesen wieder verlassen, zeitgenau zu erfassen. Die so erfassten Registriernummern werden zusammen mit den dazugehörigen Zeitstempeln (und ggf. weiteren Information, wie bspw., ob ein Fahrzeug ein- oder ausgefahren ist) an den zentralen Server übermittelt. Dieser kann aus den Registriernummern und den Zeitstempeln für ein Fahrzeug, welches auf die Parkfläche gefahren und anschließend die Parkfläche wieder verlassen hat, die Parkzeit - also die Zeit, die ein Fahrzeug auf der Parkfläche verbracht hat - ermitteln. Dabei ist bevorzugt, wenn bei der Berechnung der Parkzeit evtl. pauschale Wegezeiten auf der Parkfläche und/oder vom Betreiber der Parkfläche eingeräumte freie Parkminuten berücksichtigt werden, bspw. indem der zentrale Server die entsprechenden pauschalen Zeitgutschriften von der aus den Zeitstempeln ermittelten Parkzeit abzieht.

Allein aufgrund der Registriernummer und der ermittelten Parkzeit wird anschließend durch den zentralen Server überprüft, ob für den so festgestellten Parkvorgang ein ausreichendes Parkzeitkontingent besteht. Dazu sucht der zentrale Server anhand der Registriernummer nach einem Parkzeitkontingent in einer entsprechenden, dem zentralen Server zugänglichen Datenbank. Wenn der zentrale Server mehrere Parkflächen verwaltet, können Parkzeitkontingente auf bestimmte Parkflächen beschränkt sein. In diesem Fall ermittelt der zentrale Server anhand von in den von den Kennzeichenerkennungssystemen erhaltenen Daten enthaltenen Informationen (bspw. Identifikationscodes der Bilderfassungseinheit und/oder der Auswerteeinheit), auf welcher Parkfläche der Parkvorgang stattgefunden hat, und sucht in der Folge nur nach einem zur Registriernummer zugehörigen Parkplatzkontingent, welches auch für die Parkfläche, auf welcher der fragliche Parkvorgang stattgefunden hat, gültig ist.

Wurde ein grundsätzlich passendes Parkzeitkontingent gefunden, wird überprüft, ob die ermittelte Parkzeit kleiner ist als die im Parkzeitkontingent hinterlegte Zeit. Ist dies der Fall, kann, bspw. je nach Art der Bewirtschaftung der Parkfläche, wahlweise das Parkzeitkontingent um die ermittelte Parkzeit reduziert werden, sodass der übrige Teil des Parkzeitkontingents für einen weiteren Parkvorgang zur Verfügung steht, oder das Parkzeitkontingent wird gelöscht, sodass ggf. nicht genutzte Parkzeit vergleichbar zu einer Parkuhr verfällt.

Wird hingegen kein ausreichendes Parkzeitkontingent für einen Parkvorgang eines anhand seiner Registriernummer eindeutig identifizierbaren Fahrzeugs gefunden, wird der Parkvorgang nachträglich in Rechnung gestellt. Dabei ist zwischen registrierten Nutzern und nicht registrierten Nutzern zu unterscheiden.

Bei registrierten Nutzern ist zu einer Registriernummer eines Fahrzeugs eine Kontaktadresse des Nutzers - der nicht zwingend der Fahrzeughalter ist - in einer dem zentralen Server zugänglichen Datenbank hinterlegt, an die eine Nachberechnung der Parkgebühren erfolgen kann.

Da eine entsprechende Kontaktadresse bei einem nicht registrierten Nutzer nicht vorliegt, muss auf Basis der einem in Rechnung zu stellenden Parkvorgang zugrunde liegenden Registriernummer des Fahrzeugs zunächst dessen Halter ermittelt werden, an den anschließend die Nachberechnung gerichtet wird. Die Ermittlung des Halters ist für Verstöße gegen gesetzliche und privatrechtliche Regeln zur Nutzung eines Parkplatzes bekannt und grundsätzlich möglich. Ist gesetzlich vorgeschrieben, dass für die Ermittlung eines Halters noch Beweise für einen Verstoß gegen Parkregeln beigebracht werden, können die Kennzeichenerkennungssysteme dazu ausgebildet sein, zusammen mit der Registriernummer und dem Zeitstempel auch noch die digital erfassten Bilder an den zentralen Server zu übermitteln. Diese Bilder können dann als Beweis für die Ermittlung des Halters eines Fahrzeuges dienen, nach einem erfolgreich abgeschlossenen Parkvorgang (siehe oben) oder aber nach Ausgleich der Nachberechnung auch wieder gelöscht werden.

Für den Erwerb eines Parkzeitkontingents durch einen nicht registrierten Nutzer (grundsätzlich aber auch durch einen registrierten Nutzer) kann die Anordnung wenigstens einen, mit dem zentralen Server verbundenen Bezahlautomaten an einer Parkfläche umfassen. An diesem Bezahlautomaten kann unter Angabe der Registriernummer des Fahrzeugs eines Nutzers ein Parkzeitkontingent vergleichbar zu bekannten Parkscheinautomaten erworben werden, wobei die Größe des Parkzeitkontingents manuell ausgewählt wird oder sich aus einem eingeworfenen Geldbetrags ergibt. Ist ein Kaufvorgang am Bezahlautomaten erfolgreich abgeschlossen, werden die dazugehörigen Daten an den zentralen Server übertragen und dort in Form eines Parkzeitkontingentes abgelegt. Auf die Ausgabe eines Parkscheins o. Ä. - und somit auch auf die aufwendigen und ggf. wartungsintensiven Komponenten dafür - kann verzichtet werden.

Ist der Bezahlautomat allein für das bargeldlose Bezahlen ausgebildet, kann auch der Aufwand für die Wartung und Wechselgeldbestückung deutlich reduziert werden. Auch bietet der Bezahlautomat dann kein lohnendes Ziel, um bspw. aufgebrochen zu werden.

Bei Bedarf kann das Parkzeitkontingent auf diejenige Parkfläche beschränkt sein, welcher der Bezahlautomat zugeordnet ist. Insbesondere wenn festgestellt wird, dass für die eingegebene Registriernummer ein Nutzer registriert ist, ist aber bevorzugt, wenn das Parkzeitkontingent nicht auf eine bestimmte Parkfläche beschränkt ist und auch nicht nach Beendigung des Parkvorgangs verfällt.

Um Fehleingaben der Registriernummer an einem Bezahlautomaten zu reduzieren, kann vorgesehen sein, dass nach Eingabe der Registriernummer am Bezahlautomaten unter Rückgriff auf die beim zentralen Server vorliegenden Daten von den Kennzeichenerkennungssystemen überprüft wird, ob sich ein Fahrzeug mit der eingegebenen Registriernummer auf der Parkfläche befindet, also ein Nachweis des Einfahrens des Fahrzeugs auf die Parkfläche, aber kein Nachweis über ein anschließendes Herausfahren vorliegt. Nur wenn sich ein Fahrzeug mit der angegebenen Registrierungsnummer auf dem Parkplatz befindet, wird der Kauf eines Parkzeitkontingents ausgeführt.

Alternativ oder zusätzlich ist es möglich, dass der Bezahlautomat dazu ausgebildet ist, optoelektronisch lesbaren Code, wie bspw. einen Barcode oder einen QR-Code, auszulesen. Die Registriernummer kann dann durch einen geeigneten Code, der bspw. auf dem Display eines mobilen Endgerätes eines Nutzers (bspw. ein Smartphone) zur Anzeige gebracht werden kann oder auf einem Zettel ausgedruckt ist, an den Bezahlautomat übergeben werden, womit manuelle Fehleingaben vermieden werden. Das ggf. verwendete Smartphone nimmt dabei keine Datenverbindung o. Ä. zu der erfindungsgemäßen Anordnung auf, sodass die Anonymität des Nutzers gegenüber der Anordnung vollständig gewahrt bleibt.

Die Anordnung, vorzugsweise der zentrale Server, kann auch Schnittstellen zur Anbindung von Kassensystemen und/oder mobiler Endgeräte von Nutzern, wie bspw. Smartphones, aufweisen.

Befindet sich in der Nähe einer erfindungsgemäß ausgestatteten Parkfläche eine Örtlichkeit mit elektronischem Kassensystem, wie bspw. ein Supermarkt oder eine Post, ist es bei geeigneter Ausbildung des Kassensystems auch möglich, über die Schnittstelle der erfindungsgemäßen Anordnung ein Parkzeitkontingent zu erwerben. Vergleichbar zum oben beschriebenen Bezahlautomaten kann durch das Kassensystem unter Mitteilung der Registriernummer eines Fahrzeugs ein Parkzeitkontingent auf dem zentralen Server hinterlegt oder - sofern bereits ein Parkzeitkontingent unter dieser Registriernummer vorliegt - entsprechend erweitert werden. An dem Kassensystem ist dazu lediglich die Registriernummer des Fahrzeugs einzugeben (oder von einem durch den Nutzer vorgelegten optoelektronisch lesbaren Code auszulesen; siehe oben) und die gewünschte Parkzeit oder der bezahlte Betrag einzugeben. Die Daten werden dann an den zentralen Server übermittelt und entsprechend zu einem Parkzeitkontingent verarbeitet. Durch das Kassensystem kann - ggf. nach entsprechender Rückmeldung durch den zentralen Server - eine Bestätigung und/oder Quittung ausgegeben werden.

Durch Nutzung bereits in der Umgebung einer Parkfläche vorhandener Kassensysteme kann auf die Aufstellung eines gesonderten Bezahlautomaten verzichtet werden. Dies ist insbesondere für Parkflächen gangbar und vorteilhaft, die in erster Linie als Kundenparkplatz für Geschäfte und Lokalitäten mit entsprechenden Kassensystemen genutzt werden.

Über eine geeignete Schnittstelle der Anordnung kann ein Nutzer auch unmittelbar über sein mobiles Endgerät, wie bspw. ein Smartphone, Parkzeitkontingent erwerben. Für den Erwerb eines Parkzeitkontingents ist es grundsätzlich ausreichend, die Registriernummer des Fahrzeugs sowie Informationen zur gewünschten Parkdauer an den zentralen Server zu übermitteln. Die Bezahlung des Parkkontingents kann dabei über von Smartphones bekannte Bezahlverfahren durch den zentralen Server in Kommunikation mit dem mobilen Endgerät initiiert werden. Dabei können Bezahlverfahren genutzt werden, die dem zentralen Server keine Informationen zur Identität des Nutzers zukommen lassen - bspw. indem sie dem zentralen Server lediglich Informationen zukommen lassen, dass ein bestimmter Vorgang bezahlt wurde, aber nicht von wem. Es ist auch möglich, dass der Nutzer im Vorweg zum Parkvorgang auf beliebigem Weg nicht-personalisierte Parkzeitcoupons erwirbt und er zum Erwerb von Parkzeitkontingent neben der Registrierungsnummer des von ihm genutzten Fahrzeugs auch den Code eines Parkzeitcoupons an den zentralen Server übermittelt, der dazu ausgebildet ist, den Code des Parkzeitcoupons auf einmalige Nutzung zu prüfen und bei der ersten Benutzung in ein Parkzeitkontingent für die angegebene Registrierungsnummer verarbeitet. In sämtlichen Fällen bleibt die Identität des nicht registrierten Nutzers vor der erfindungsgemäßen Anordnung verborgen.

Das mobile Endgerät kann - bspw. mithilfe einer geeigneten App - dazu ausgebildet sein, aus einem von dem mobilen Endgerät aufgenommenen Foto das Kennzeichen vergleichbar zu einem Kennzeichenerkennungssystem auszulesen und an den zentralen Server zu übermitteln. Dadurch können evtl. Fehleingaben der Registriernummer vermieden werden.

Soll oder kann ein Parkzeitkontingent nur für eine bestimmte Parkfläche erworben werden, ist bevorzugt, wenn das mobile Endgerät bei der Übermittlung der Registrierungsnummer des parkenden Fahrzeugs auch noch Positionsdaten des mobilen Endgerätes an den zentralen Server übermittelt, der dazu ausgebildet ist, anhand der Positionsdaten die Parkfläche an oder auf der sich das mobile Endgerät befindet zu ermitteln, wobei dann davon ausgegangen wird, dass es sich hierbei um die Parkfläche handelt, auf der das Fahrzeug mit der angegebenen Registrierungsnummer geparkt ist. Dazu kann auf evtl. vorhandene Positionsbestimmungsmodule des mobilen Endgerätes, wie bspw. GPS-Empfänger oder GSM- bzw. WLAN-Ortung, zurückgegriffen werden. Es ist aber auch möglich, an der Parkfläche gut sichtbar eine eindeutige Identifikationskennzeichnung der Parkfläche, vorzugsweise in Form eines optoelektronisch lesbaren Codes, wie ein QR-Code, vorzusehen. Die Identifikationskennzeichnung der Parkfläche kann dann ebenfalls zusammen mit der Registrierungsnummer des Fahrzeugs und ggf. weiteren Informationen über das mobile Endgerät eingegeben oder von diesem optisch erfasst und ausgewertet werden, und wird dann ebenfalls an den zentralen Server übermittelt.

Für einen registrierten Nutzer werden auf einer dem zentralen Server zugänglichen Datenbank Kontaktinformationen eines Nutzers in einer der Registriernummer eines Fahrzeugs zuordenbaren Form abgelegt. Die Kontaktinformationen können die für eine nachträgliche Rechnungsstellung erforderlichen Informationen umfassen, wie bspw. postalische Adresse des Nutzers und/oder dessen E-Mail-Adresse. Es ist aber auch möglich, dass die Kontaktinformationen zusätzliche Informationen, wie bspw. eine Mobilfunknummer oder den Benutzernamen eines internetbasierten Messenger-Dienstes, umfassen, um dem Nutzer Kurzmitteilungen zukommen lassen zu können. Der Nutzer kann dann über den nahenden Ablauf der maximalen Parkdauer auf einer bestimmten Parkfläche, auf welcher er sein Fahrzeug geparkt hat, oder ein unzureichendes Parkzeitkontingent zeitnah informiert werden.

Es ist bevorzugt, wenn der Server dazu ausgebildet ist, die Rechnungsstellung bei nicht ausreichendem oder nicht vorhandenen Parkzeitkontingent zeitlich verzögert und erst nach erneuter Prüfung auf ein vorhandenes Parkzeitkontingent auszulösen. Der Nutzer erhält dadurch die Möglichkeit, innerhalb einer Karenzzeit nach einem abgeschlossenen Parkvorgang noch ein ausreichendes Parkzeitkontingent zu erwerben und so eine nachträgliche Rechnungsstellung, evtl. umfassend zusätzliche Bearbeitungsgebühren, zu vermeiden. Ein registrierter Nutzer kann bspw. per Kurzmitteilung auf ein unzureichendes Parkzeitkontingent und die Möglichkeit zum Nachlösen hingewiesen werden. Für nicht registrierte Nutzer kann an der Ausfahrt einer Parkfläche ein optischer Hinweis, bspw. ein bei Bedarf aufleuchtendes Hinweisschild, vorgesehen werden.

Zur Erläuterung des erfindungsgemäßen Verfahrens wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:

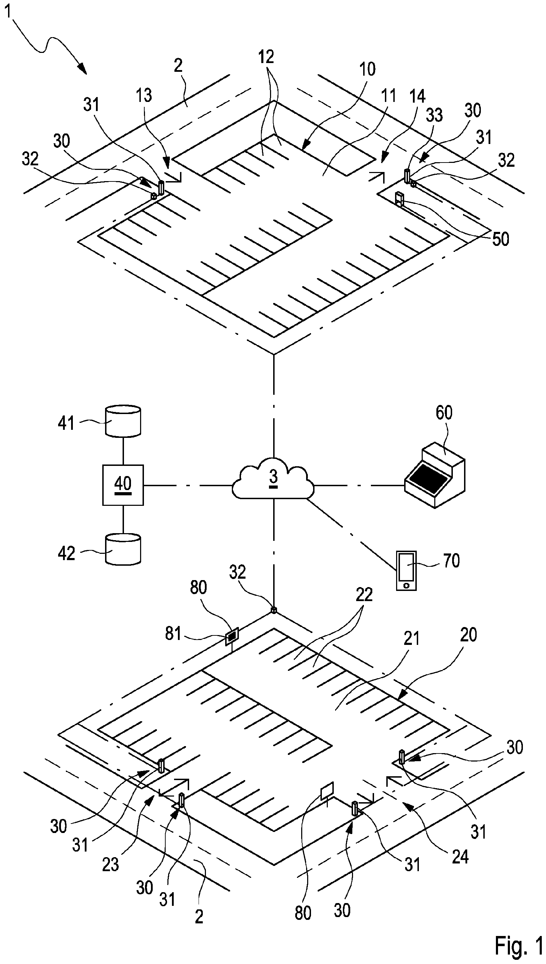

- Figur 1:: eine schematische Darstellung einer erfindungsgemäßen Anordnung.

In Figur 1 ist eine erfindungsgemäße Anordnung 1 zur Parkraumüberwachung auf zwei voneinander getrennten Parkflächen 10, 20 gezeigt.

Die Parkfläche 10 ist ein öffentlicher, von den umgebenen Straßen 2 abgesetzter Parkplatz 11 mit einer Vielzahl von Stellplätzen 12. Der Parkplatz 11 weist eine als Einfahrt vorgesehene erste Zufahrt 13 und eine davon getrennte, als Ausfahrt vorgesehene zweite Zufahrt 14 auf.

Bei der Parkfläche 20 handelt es sich ebenfalls um ein von den umgebenden Straßen 2 abgesetzten Parkplatz 21 mit mehreren Stellplätzen 22. Der Parkplatz 21 weist zwei Zufahrten 23, 24 auf, die jeweils sowohl als Ein- als auch als Ausfahrt genutzt werden können. Die erste Zufahrt 23 ist dabei einspurig ausgestaltet, während bei der zweiten Zufahrt 24 getrennte Spuren für Ein- und Ausfahrt vorgesehen sind.

An jeder der Zufahrten 13, 14, 23, 24 sind Kennzeichnungserkennungssysteme 30 vorgesehen. Die Kennzeichenerkennungssysteme 30 umfassen dabei Bilderfassungseinheiten 31, mit denen die Front jedes über die jeweilige Zufahrt 13, 14, 23, 24 fahrenden Fahrzeugs mitsamt Kraftfahrzeugkennzeichen fotografisch erfasst wird. Die von den Bilderfassungseinheiten 31 aufgenommenen Bilder werden von damit datenverbundenen Auswerteeinheiten 32 zugeführt, welche die Registriernummern der auf den auf den Bildern enthaltenen Kraftfahrzeugkennzeichen als alphanumerische Zeichenkette extrahieren. Bei der Parkfläche 10 ist jeder Bilderfassungseinheit 31 eine eigene Auswerteeinheit 32 zugeordnet; bei Parkfläche 20 sind die Bilderfassungseinheiten 31 mit einer gemeinsamen Auswerteeinheit 32 datenverbunden.

Die Auswerteeinheiten 32 sind über das Internet 3 mit einem zentralen Server 40 datenverbunden und übermitteln für jedes durch die Bilderfassungseinheiten 31 erfasste Fahrzeug eine Mitteilung an den zentralen Server 40. Diese Mitteilung umfasst neben dem von der Bilderfassungseinheit 31 aufgenommenen Foto und der daraus extrahierten Registriernummer noch den Zeitpunkt der Aufnahme in Form eines Zeitstempels, sowie eine eindeutige Identifikationsnummer der Bilderfassungseinheit 31. Auf Basis von Registriernummer, Zeitstempel und Identifikationsnummer der Bilderfassungseinheit 31 kann der zentrale Server ermitteln, welches Fahrzeug zu welchem Zeitpunkt auf welchen Parkplatz 10, 20 eingefahren oder wieder verlassen hat. Letzteres lässt sich in Kenntnis der Anordnung der einzelnen Bilderfassungseinheiten 31 problemlos aus der Identifikationsnummer der Bilderfassungseinheit 31 ableiten.

Die Mitteilungen bzw. die daraus abgeleiteten Informationen (kursiv gedruckt) können bspw. die folgende Form aufweisen

| **Foto** | **Registrierungsnummer** | **Zeitstempel** | **ID Bilderfassungseinheit** | ***Standort Bilderfas-sungseinheit*** |
|---|---|---|---|---|
| (nicht dargestellt) | HA-B 123 | 21.12.2000 16:31:00 | 213434 | *Parkfläche 10, Einfahrt* |
| 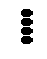 | 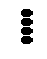 | 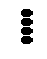 | 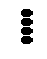 | 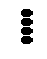 |
| (nicht dargestellt) | HA-B 123 | 21.12.2000 19:01:00 | 124251 | *Parkfläche 10, Ausfahrt* |
| 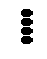 | 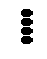 | 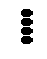 | 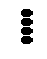 | 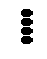 |

Der zentrale Server 40 ist dazu ausgebildet, aus den von den Kennzeichenerkennungssystemen 30 empfangenen Mitteilungen die tatsächlichen Parkzeiten für Fahrzeuge, welche einen der Parkflächen 10, 20 verlassen, zu ermitteln. Dazu wird die Differenz aus dem Zeitstempel der Mitteilung über das Verlassen einer der anhand der Identifikationsnummer der Bilderfassungseinheit 31 identifizierbaren Parkflächen 10, 20 und dem Zeitstempel der zuvor erhaltenen Mitteilung des Fahrzeugs mit derselben Registrierungsnummer zur Einfahrt auf die fragliche Parkfläche 10, 20 gebildet. Für das oben angegebene Beispiel ergibt sich somit eine Parkzeit von 2,5 Stunden.

Die so ermittelte Differenz stellt für Parkvorgänge auf der Parkfläche 10 unmittelbar die Parkzeit dar. Auf der Parkfläche 20 sind die ersten dreißig Minuten eines Parkvorgangs frei, weshalb von der ermittelten Differenz zunächst die entsprechenden Freiminuten abgezogen werden und dieses Ergebnis dann die im weiteren Verlauf herangezogene Parkzeit darstellt. Hätte der Parkvorgang des oben angegebenen Beispiels also auf der Parkfläche 20 stattgefunden, betrüge als Parkzeit letztendlich nur 2 Stunden.

Dem zentralen Server 40 zugeordnet ist einer Datenbank 41, in der individuelle Parkzeitkontingente für Registriernummern von Fahrzeugen abgelegt sind. In anderen Worten ist für jede Registriernummer eines Fahrzeugs, für welches ein gültiges Parkzeitkontingent besteht, ein Datensatz vorgesehen, dessen primärer Schlüssel die Registriernummer des Fahrzeuges ist und dessen Wert die Größe des Parkzeitkontingentes ist. Auch wird festgehalten, ob ein bestimmtes Parkzeitkontingent nur für eine bestimmte Parkfläche 10, 20 gültig ist. Liegt kein gültiges Parkzeitkontingent vor, ist dieser Wert entweder null oder der Datensatz wird gelöscht. Die Datenbank kann bspw. das folgende Format haben:

| **Registrierungsnummer** | **Parkzeitkontingent** | **Beschränkung auf Parkfläche** |
|---|---|---|
| HA-B 123 | 180 min | |
| E-FG 18 | 60 min | Parkfläche 10 |
| 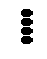 | 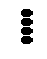 | 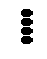 |

Darüber hinaus steht dem zentralen Server 40 noch eine Datenbank 42 mit registrierten Nutzern zur Verfügung. In dieser Datenbank sind - erneut mit der Registriernummer eines Fahrzeuges als primärer Schlüssel - Kontaktdaten in Form einer postalischen Rechnungsadresse, ggf. einer E-Mail-Adresse für den vereinfachten Rechnungsversand und ggf. einer Mobilfunknummer zur Übermittlung von Kurzmitteilungen hinterlegt.

| **Registrierungsnummer** | **Adresse** | **E-Mail** | **Mobilfunknummer** |
|---|---|---|---|
| HA-B 123 | Musterstr. 17 12345 Musterstand | max@mustermann.de | 555-12345 |
| 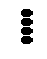 | 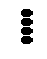 | 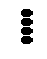 | 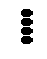 |

Wurde durch den zentralen Server 40 eine Parkzeit für ein Fahrzeug mit einer bestimmten Registriernummer ermittelt, so wird anschließend überprüft, ob ein für diese Parkzeit auf der fraglichen Parkfläche 10, 20 ausreichendes Parkzeitkontingent in der Datenbank 40 unter der fraglichen Registriernummer vorliegt.

Wird ein nicht auf eine bestimmte Parkfläche begrenztes, ausreichendes Parkzeitkontingent oder aber für einen Parkvorgang auf der Parkfläche 20 ein auf eben diese Parkfläche 20 beschränktes, ausreichendes Parkzeitkontingent aufgefunden, wird das Parkzeitkontingent um die ermittelte Parkzeit reduziert.

Wurde ein Parkvorgang auf der Parkfläche 10 abgeschlossen und liegt ein ausreichendes, nur für diese Parkfläche 10 gültiges Parkzeitkontingent vor, wird dieses auf null gesetzt bzw. vollständig gelöscht, unabhängig davon, ob das Parkzeitkontingent durch die ermittelte Parkzeit vollständig aufgebraucht wurde. In anderen Worten verfallen explizit für die Parkfläche 10 erworbene und auf diese beschränkte Parkzeitkontingente vollständig nach Nutzung der Parkfläche 10, selbst wenn das Parkzeitkontingent nicht vollständig aufgebraucht sein sollte. Dies ist vergleichbar zu bekannten Parkscheinautomatensystemen.

Liegt kein ausreichendes, für die fragliche Parkfläche 10, 20 gültiges auf die fragliche Parkfläche 10, 20 beschränktes oder aber allgemein für alle Parkflächen 10, 20 gültiges Parkzeitkontingent vor, erfolgt grundsätzlich eine nachträgliche Rechnungsstellung. Diese Rechnungsstellung erfolgt jedoch zeitverzögert und erst nach dann erneut erfolgender Prüfung auf das Vorhandensein eines ausreichenden Parkzeitkontingentes, sodass es einem Nutzer grundsätzlich möglich ist, auch nachträglich - nämlich innerhalb der vorgegebenen Karenzzeit - noch ein ausreichendes Parkzeitkontingent zu erwerben, um die nachträgliche Rechnungsstellung abzuwenden.

Auf der Parkfläche 10 weist die an der für die Ausfahrt vorgesehenen Zufahrt 14 angeordnete Bilderfassungseinheit 31 eine Hinweisleuchte 33 auf, die vom zentralen Server 40 über die Datenverbindung gesteuert einem mit seinem Fahrzeug ausfahrenden Nutzer anzeigt, falls kein für den soeben abgeschlossenen Parkvorgang ausreichendes Parkzeitkontingent vorhanden ist. Über diese Hinweisleuchte 33 können auch nicht registrierte Nutzer auf ein nicht vorhandenes oder nicht ausreichendes Parkzeitkontingent hingewiesen werden.

An der Parkfläche 20 ist keine entsprechende Hinweisleuchte 33 vorgesehen, sodass kein Hinweis über mangelndes Parkzeitkontingent an nicht registrierte Nutzer erfolgen kann. Registrierte Nutzer, also Nutzer die sich in der Datenbank 42 mit der Registriernummer ihres Fahrzeugs sowie ihren Kontaktdaten eingetragen haben, können bspw. über eine Kurzmitteilung auf ihr mobiles Endgerät auf fehlendes oder unzureichendes Parkzeitkontingent hingewiesen werden. Vergleichbares gilt auch für Hinweise, falls eine auf einer bestimmten Parkfläche 10, 20 maximal erlaubte Parkzeit erreicht wird.

Wird auch nach Ablauf der Karenzzeit in der Datenbank 41 kein ausreichendes, für die fragliche Parkfläche 10, 20 gültiges Parkzeitkontingent aufgefunden, erfolgt die nachträgliche Rechnungsstellung. Bei registrierten Nutzern wird dazu die Rechnung an die zur Verfügung gestellte Postanschrift ausgestellt. Die Rechnung wird dann entweder postalisch oder - sofern E-Mail-Adresse und Einverständnis des Nutzers vorliegen - per E-Mail an den Nutzer versandt.

Bei nicht registrierten Nutzern, also bei Nutzern, die nicht in der Datenbank 42 hinterlegt wird, wird mithilfe des zur Kennzeichenermittlung herangezogenen und dem zentralen Server 40 zur Verfügung gestellten Fotos eine Fahrzeughalterermittlung bei den zuständigen Behörden veranlasst. Die nachträgliche Rechnungsstellung erfolgt dann an die so ermittelte Anschrift des Fahrzeughalters.

Zum Erwerb von Parkzeitkontingenten sind bei der in Figur 1 gezeigten Anordnung 1 verschiedene Möglichkeiten gegeben.

Grundsätzlich kann vorgesehen sein, dass insbesondere registrierte Nutzer Parkzeitkontingente für ihr anhand der Registriernummer identifizierbaren Fahrzeugs über ein Internet-Portal erwerben können (nicht dargestellt). Entsprechende Internet-Portale sind dem Fachmann geläufig und bedürfen weder detaillierter Darstellung noch Erläuterung.

Um aber auch nicht registrierten Nutzern den Erwerb von Parkzeitkontingenten und somit die registrierungsfreie Nutzung der Parkflächen 10, 20 zu ermöglichen, weist die Anordnung verschiedene Möglichkeiten zum Erwerb von Parkzeitkontingenten auf, die selbstverständlich auch von registrierten Nutzer genutzt werden können.

Auf der Parkfläche 10 ist ein mit den zentralen Server 40 verbundener Bezahlautomat 50 vorgesehen, der zusätzlich zu einer Bezahlmöglichkeit zu Eingabe einer Registriernummer ausgebildet ist. Zum Erwerb eines Parkzeitkontingents gibt ein Nutzer die Registriernummer seines bereits geparkten Fahrzeugs ein und bezahlt den für ein gewünschtes Parkzeitkontingent erforderlichen Betrag. Die entsprechenden Informationen werden zusammen mit einer Identifikationsnummer des Bezahlautomaten 50, welche die Zuordnung desselben zur Parkfläche 10 ermöglicht, an den zentralen Server 40 übermittelt:

| **Registrierungsnummer** | **Bezahltes Parkzeitkontingent** | **ID Bezahlautomat** | ***Standort Bezahlautomat*** |
|---|---|---|---|
| HA-B 123 | 180 min | 97846 | *Parkfläche 10* |

Der zentrale Server 40 überprüft anhand der erhaltenen Registrierungsnummer und der Nutzer-Datenbank 42, ob unter der Registriernummer ein Nutzer registriert ist. Wird zu der Registriernummer (wie in diesem Beispiel) eine Nutzerregistrierung gefunden, wird das gewünschte Parkzeitkontingent als allgemein verwendbares Parkzeitkontingent dem fraglichen Nutzer gutgeschrieben - auch wenn dieser nicht unmittelbar identisch zu der Person am Bezahlautomat 50 sein muss. Wird kein Nutzerdatensatz gefunden, handelt es sich um einen nicht registrierten Nutzer, sodass das gewünschte Parkzeitkontingent auf die Parkfläche 10 beschränkt in der Datenbank 41 eingerichtet wird (vgl. obige Tabelle, Registrierungsnummer "E-FG 18"). Im letztgenannten Fall verfällt evtl. verbliebenes Parkzeitkontingent bei Verlassen der Parkfläche 20 (siehe oben).

Die Anordnung 1 umfasst weiterhin über das Internet verfügbare Schnittstellen für die Anbindung von Kassensystemen 60 und mobilen Endgeräten 70, wie bspw. Smartphones.

Diese Schnittstellen ermöglichen es, Parkzeitkontingente über in der Nähe der Parkflächen 10, 20 bereits vorhandene Kassensystemen 60, bspw. von Supermärkten oder sonstigen Lokalitäten, zu erwerben. Dazu muss an einem, bspw. durch Aufspielen von Software geeignet eingerichteten Kassensystem 60 vergleichbar zum Vorgang an einem Bezahlautomaten 50 die Registrierungsnummer des Fahrzeuges, für das ein Parkzeitkontingent erworben werden soll, angegeben und anschließend die Gebühr für das gewünschte Parkzeitkontingent erworben werden. Ist seitens des Kassensystems 60 nicht bereits voreingestellt, für welche Parkfläche 10, 20 das Parkzeitkontingent erworben werden soll - bspw. weil das Kassensystem 60 in einem Geschäft unmittelbar neben einer der Parkflächen 10, 20 angeordnet ist und dort nur für die entsprechende Parkflächen 10, 20 Parkzeitkontingente erworben werden können -, ist entweder die gewünschte Parkfläche 10, 20 anzugeben oder es können allgemeingültige Parkzeitkontingente erworben werden. Die am Kassensystem 60 erfassten Informationen werden an den zentralen Server 40 übermittelt und dort entsprechend in der Datenbank 41 abgelegt. Eine entsprechende Mitteilung bei Beschränkung auf eine vorgegebene Parkfläche kann bspw. wie folgt aussehen:

| **Registrierungsnummer** | **bezahltes Parkzeitkontingent** | **Beschränkung auf Parkfläche** |
|---|---|---|
| E-FG 18 | 60 min | Parkfläche 10 |

Dabei kann ein aufgrund der übermittelten Informationen grundsätzlich auf eine bestimmte Parkfläche 10, 20 beschränktes Parkzeitkontingent entsprechend dem oben erläuterten Erwerb an einem Bezahlautomat 50 als allgemeingültiges Parkzeitkontingent abgelegt werden, falls ein registrierter Nutzer zur eingegebenen Registriernummer gefunden wurde (siehe oben).

Der zentrale Server 40 kann bei erfolgreicher Einrichtung eines Parkzeitkontingentes eine entsprechende Rückmeldung an das Kassensystem 60, an dem dann bei Bedarf auch eine Quittung ausgegeben werden kann.

Um Fehleingaben einer Registriernummer, unter der ein Parkzeitkontingent erworben werden soll, am Kassensystem zu vermeiden, kann vorgesehen sein, dass ein Nutzer auf einem mobilen Endgerät, wie bspw. ein Smartphone, mit Hilfe einer geeigneten Applikation die fragliche Registriernummer in optoelektronisch auslesbarer Form, bspw. als Barcode oder QR-Code, zur Anzeige bringen kann, wobei der Code dann von den regelmäßig an Kassensystemen 60 vorhandenen Scannern eingelesen werden kann.

Ein Nutzer kann auch unmittelbar über ein mobiles Endgerät 70, wie bspw. ein Smartphone, Parkzeitkontingent erwerben. Dazu kann ein Nutzer bspw. auf da bereits oben erwähnte Internet-Portal zugreifen. Um insbesondere auch für nicht registrierten Benutzern den Erwerb von Parkzeitkontingenten möglichst einfach zu gestalten, sind an der Parkfläche 20 Hinweisschilder 80 mit einem QR-Code als optoelektronisch auslesbaren Identifikationskennzeichnung 81 vorgesehen, die - wenn von einem mobilen Endgerät 70 abfotografiert und gemäß dem Stand der Technik verarbeitet - den Nutzer auf eine für die jeweilige Parkfläche 20 bestimmte Internetseite führt, auf der die Registriernummer des Fahrzeugs sowie das gewünschte Parkzeitkontingent anzugeben sind, die dann an den zentralen Server 40 übertragen. Das gewünschte Parkzeitkontingent kann dann über bekannte Internetzahlungsdienstleister bezahlt werden, wobei der zentrale Server 40 lediglich die Bestätigung des Internetzahlungsdienstleisters benötigt, dass das Parkzeitkontingent bezahlt wurde. Die von dem mobilen Endgerät 70 an den zentralen Server 40 übermittelten Informationen können also umfassen:

| **Registrierungsnummer** | **gewünschtes Parkzeitkontingent** | ***Beschränkung auf Parkfläche*** | **Vorgangs nummer** |
|---|---|---|---|
| E-FG 18 | 60 min | *Parkfläche 20* | Ydsfxsdr23 |

Die Beschränkung auf die Parkfläche folgt dabei aus der von dem Nutzer genutzten Internetseite. Die Vorgangsnummer ist ein eindeutiger Code, welcher zur Zuordnung von Zahlungen verwendet wird. Nähere Angaben zur Person des Nutzers sind nicht erforderlich.

Die Bestätigung des Zahlungsdienstleisters für eine erfolgte Zahlung kann dann wie folgt aussehen:

| **Vorgangs nummer** | **Bezahlt** |
|---|---|
| Ydsfxsdr23 | Ja |

Ist die entsprechende Bestätigung erfolgt, ist der Server 40 dazu ausgebildet, das gewünschte und bezahlte Parkzeitkontingent in der Datenbank 41 unter der angegebene Registrierungsnummer zu hinterlegen, wobei, je nach Vorgabe, eine Einschränkung des Parkzeitkontingents auf eine bestimmte Parkfläche 10, 20 anhand der Internetseite, auf welche der Nutzer durch die Identifikationskennzeichnung 81 geführt wurde, erfolgen kann. Auch hier ist es selbstverständlich möglich, eine grundsätzlich vorgesehene Beschränkung eines auf diese Weise erworbenen Parkzeitkontingents auf eine bestimmte Parkfläche aufzuheben, wenn unter der angegebenen Registrierungsnummer eine Nutzerregistrierung in der Datenbank 42 gefunden wird.

## Patentansprüche

1. Anordnung (1) zur Parkraumüberwachung von anhand Kennzeichen identifizierbaren Fahrzeugen auf wenigstens einer Parkfläche (10, 20) mit wenigstens einer Zufahrt (13, 14, 23, 24) für registrierte und nicht registrierte Nutzer umfassend
- jeweils ein Kennzeichenerkennungssystem (30) an allen Zufahrten (13, 14, 23, 24) jeder Parkfläche (10, 20) zur zeitgenauen Erfassung der Registriernummer jedes ein- und/oder ausfahrenden Fahrzeugs und Übermittelung wenigstens der erfassten Registriernummer und einem Zeitstempel an einen zentralen Server (40);
- einen zentralen Server (40) zur Ermittlung der Parkzeit eines durch die Registriernummer eindeutig identifizierbaren Fahrzeugs anhand der von den Kennzeichenerkennungssystemen (30)übermittelten Daten durch Abgleich des Zeitstempels der erfassten Zufahrt des Fahrzeugs auf die Parkfläche (10, 20) und des Zeitstempels der erfassten nachfolgenden Ausfahrt des Fahrzeugs von der Parkfläche (10, 20),
wobei der zentrale Server (40) zum Abgleich der ermittelten Parkzeit mit in einer dem zentralen Server (40) zugänglichen Datenbank (41) hinterlegten und anhand von Registriernummern zuordenbaren Parkzeitkontingenten dazu ausgebildet ist,
- die ermittelte Parkzeit von einem der erfassten Registriernummer zuordenbaren, ausreichenden Parkzeitkontingent abzuziehen oder ein der erfassten Registriernummer zuordenbaren, ausreichenden Parkzeitkontingent zu löschen;
- bei einem der erfassten Registriernummer zuordenbaren, aber nicht ausreichenden Parkzeitkontingent oder bei keinem der erfassten Registriernummer zuordenbaren Parkzeitkontingent: Auslösen einer nachträglichen Rechnungsstellung an, bei registrierten Nutzern, eine in einer dem zentralen Server (40) zugänglichen Datenbank (42) hinterlegten, der erfassten Registriernummer zuordenbaren Kontaktadresse oder, bei nicht registrierten Nutzern, an den über die Registriernummer ermittelbaren Halter des Fahrzeugs.

2. Anordnung nach Anspruch 1,
**dadurch gekennzeichnet, dass**
bei mehreren Parkflächen (10, 20) die auf dem zentralen Server (40) hinterlegten Parkzeitkontingente wenigstens teilweise bestimmten Parkflächen (10, 20) zugeordnet sind, die von den Kennzeichenerkennungssystemen (30) übermittelten Daten Informationen zur Zuordnung der Parkfläche (10, 20) enthalten und der zentrale Server (40) zum Abgleich der ermittelten Parkzeit nur mit für die sich aus den übermittelten Daten ergebende Parkfläche (10, 20) gültigen Parkzeitkontingenten ausgebildet ist.

3. Anordnung nach einem der vorhergehenden Ansprüche,
**dadurch gekennzeichnet, dass**
die Anordnung (1) für den Erwerb eines Parkzeitkontingents einen mit dem zentralen Server (40) verbundenen Bezahlautomat (50) an wenigsten einer Parkfläche (10, 20) umfasst, der zur Eingabe einer Registriernummer ausgebildet ist.

4. Anordnung nach einem der vorhergehenden Ansprüche,
**dadurch gekennzeichnet, dass**
die Anordnung (1) einer Schnittstelle für die Anbindung von Kassensystemen (60) und/oder mobiler Endgeräte (70) von Nutzern zum, vorzugsweise anonymen Erwerb von global gültigen und/oder parkflächenindividuellen Parkzeitkontingenten umfasst, wobei über die Schnittstelle wenigstens die Registriernummer, vorzugsweise auch die gewünschte oder bereits bezahlte Parkdauer und/oder die Positionsdaten zur Ermittlung der betroffenen Parkfläche (10, 20) an den zentralen Server (40) übermittelbar ist.

5. Anordnung nach Anspruch 4,
**dadurch gekennzeichnet, dass**
an wenigstens einer Parkfläche (10, 20) vorzugsweise optoelektronisch lesbare Identifikationskennzeichnung (81) vorgesehen ist, die als Positionsdaten zur Ermittlung der betroffenen Parkfläche (10, 20) geeignet sind, wenn über ein mobiles Endgerät (70) an den zentralen Server (40) übermittelt.

6. Anordnung nach einem der vorhergehenden Ansprüche,
**dadurch gekennzeichnet, dass** Kennzeichenerkennungssysteme (30) jeweils wenigstens eine Bilderfassungseinheit (31) umfassen, deren Bilder zur automatisierten Ermittlung von Registriernummer durch eine Auswerteeinheit (32) ausreichend sind.

7. Anordnung nach einem der vorhergehenden Ansprüche,
**dadurch gekennzeichnet, dass**
der zentrale Server (40) dazu ausgebildet ist, bei der Ermittlung der Parkzeit pauschale Zeitgutschriften zu berücksichtigen, wobei die pauschalen Zeitgutschriften vorzugsweise parkflächenindividuell vorgegeben sind.

8. Anordnung nach einem der vorhergehenden Ansprüche,
**dadurch gekennzeichnet, dass**
eine dem zentralen Server (40) zugängliche Datenbank (42) mit Kontaktinformationen von registrierten Nutzern in einer der Registriernummer von Fahrzeugen zuordenbaren Form vorgesehen ist.

9. Anordnung nach einem der vorhergehenden Ansprüche,
**dadurch gekennzeichnet, dass**
der zentrale Server (40) dazu ausgebildet ist, die Rechnungsstellung bei nicht ausreichendem oder nicht vorhandenen Parkzeitkontingent zeitlich verzögert und erst nach erneuter Prüfung auf ein vorhandenes Parkzeitkontingent auszulösen.

10. Verfahren zur Parkraumüberwachung von anhand Kennzeichen identifizierbaren Fahrzeugen auf wenigstens einer Parkfläche (10, 20) mit wenigstens einer Zufahrt (13, 14, 23, 24) für registrierte und nicht registrierte Nutzer, umfassend
- Zeitgenaues Erfassen der Registriernummer jedes ein-und/oder ausfahrenden Fahrzeugs mit Hilfe von Kennzeichenerkennungssystemen (30) an allen Zufahrten (13, 14, 23, 24) jeder Parkfläche (10, 20) und Übermittelung wenigstens der erfassten Registriernummer und einem Zeitstempel an einen zentralen Server (40);
- Ermitteln der Parkzeit eines durch die Registriernummer eindeutig identifizierbaren Fahrzeugs anhand der von den Kennzeichenerkennungssystemen (30) übermittelten Daten durch Abgleich des Zeitstempels der erfassten Zufahrt des Fahrzeugs auf die Parkfläche (10, 20) und des Zeitstempels der erfassten nachfolgenden Ausfahrt des Fahrzeugs von der Parkfläche (10, 20) durch einen zentralen Server (40),
- Abgleich der ermittelten Parkzeit mit in einer dem zentralen Server (40) zugänglichen Datenbank (41) hinterlegten und anhand von Registriernummern zuordenbaren Parkzeitkontingenten, wobei
- die ermittelte Parkzeit von einem der erfassten Registriernummer zuordenbaren, ausreichenden Parkzeitkontingent abgezogen oder ein der erfassten Registriernummer zuordenbares, ausreichendes Parkzeitkontingent gelöscht wird;
- bei einem der erfassten Registriernummer zuordenbaren, aber nicht ausreichenden Parkzeitkontingent oder bei keinem der erfassten Registriernummer zuordenbaren Parkzeitkontingent, eine nachträgliche Rechnungsstellung an, bei registrierten Nutzern, eine in einer dem zentralen Server (40) zugänglichen Datenbank (42) hinterlegten, der erfassten Registriernummer zuordenbaren Kontaktadresse oder, bei nicht registrierten Nutzern, an den über die Registriernummer ermittelbaren Halter des Fahrzeugs ausgelöst wird.

11. Verfahren nach Anspruch 10,
**dadurch gekennzeichnet, dass**
bei mehreren Parkflächen (10, 20) die auf dem zentralen Server (40) hinterlegten Parkzeitkontingente wenigstens teilweise bestimmten Parkflächen (10, 20) zugeordnet werden, die von den Kennzeichenerkennungssystemen (30) übermittelten Daten Informationen zur Zuordnung der Parkfläche (10, 20) enthalten und beim Abgleich der ermittelten Parkzeit nur mit für die sich aus den übermittelten Daten ergebende Parkfläche (10, 20) gültigen Parkzeitkontingenten berücksichtigt werden.

12. Verfahren nach einem der Anspruch 10 oder 11,
**dadurch gekennzeichnet, dass**
bei der Ermittlung der Parkzeit pauschale Zeitgutschriften berücksichtigt werden, wobei die pauschalen Zeitgutschriften vorzugsweise parkflächenindividuell vorgegeben sind.

13. Verfahren nach einem der Anspruch 10 bis 12,
**dadurch gekennzeichnet, dass**
die Rechnungsstellung bei nicht ausreichendem oder nicht vorhandenen Parkzeitkontingent zeitlich verzögert und erst nach erneuter Prüfung auf ein vorhandenes Parkzeitkontingent ausgelöst wird.
